# EUROPEAN PATENT SPECIFICATION

(11) **EP 2 979 929 B1**
(45) Date of publication and mention of the grant of the patent: **06.09.2017**
(21) Application number: 14465517.2
(22) Date of filing: 30.07.2014
(51) Int. Cl.: B60R 11/00

(54) **An adjustable multi-use windshield bracket**
Verstellbare Mehrzweckklammer für Windschutzscheibe
Support de pare-brise multi-usage réglable

(43) Date of publication of application: 03.02.2016
(73) Proprietor: Continental Automotive GmbH, 30165 Hannover (DE)
(72) Inventor: Vuletici, Goran, 327367 Campia, Jud. Caras-Severin (RO); Lapugean, Alexandru, 300730 Timisoara, Jud. Timis (RO)
(74) Representative: Büchner, Jörg

(56) References cited:
- EP-A1- 1 625 976
- WO-A1-2013/070158
- DE-A1-102010 008 215

## Description

The invention relates to an adjustable multi-use windshield bracket for mounting electronic and/or mechanical components onto a windshield of a vehicle.

Windshield brackets are mechanical interfacing components used in the automotive industry to mount different electronic and/or mechanical components such as sensor devices on the windshield of a vehicle. The design of the windshield brackets is dictated by the shape, position and orientation of the windshield they are mounted on, as well as the particular requirements of the components received by the windshield brackets. These design requirements are often in conflict with each other. Accordingly, it has been necessary to provide a bracket with different design for each carline. The reason for this is that the different windshield orientation with respect to the average ground plane requires a different mounting angle of the sensor device received by the bracket with respect to the windshield of the vehicle, in particular if the sensor device does not have any software angle adjustment options. Even if such a software angle correction is available, some extreme windshield angles can still cause performance degradation of the sensor device. An additional issue is the unpredictability of the production process for producing windshields. From the nominal design of the windshield, it is not possible to accurately predict the final real shape of the windshield. A consequence of this is that in the area where the sensor devices are mounted, it is impossible to predict the pitch angle deviations that can affect the performance of the sensor devices negatively. The most common way of dealing with these different requirements from carline to carline is to just have a different bracket interface built for each carline. To avoid the production of a different part every time, another option is to have a single adjustable bracket interface. However, solutions up until now are formed by relatively complicated mechanical systems using pairs of nuts and bolts to provide a hinge and an angle fixing solution or a flexible beam system that can change shape to reorient the sensor device to the windshield.

An example of a multi-use windshield bracket is known from WO 2013/070158 A1.

Accordingly, it is an object of the present invention to provide a method and apparatus to mount electronic and/or mechanical components onto a windshield of a vehicle which can be used for windshields with different inclination angles used in different carlines.

This object is achieved by an adjustable multi-use windshield bracket comprising the features of claim 1.

In a further possible embodiment of the adjustable multi-use windshield bracket according to the first aspect of the present invention, the inclination angle between the fixed bracket component and the rotating mobile second bracket component is adjustable by means of an inserted rectified stand limiting the rotation of the mobile second bracket component towards the flat surface.

In a still further possible embodiment of the adjustable multi-use windshield bracket according to the first aspect of the present invention, the rectified stand is inserted between the mobile second bracket component and the flat surface and comprises a height defining the desired set inclination angle.

In a still further possible embodiment of the adjustable multi-use windshield bracket according to the first aspect of the present invention, the snapper of the fixed bracket component has a half cylindrical retaining surface which is marginally smaller than the radius of the half cylindrical pocket of the second mobile bracket component to allow a preassembly of both bracket components.

In a still further possible embodiment of the adjustable multi-use windshield bracket according to the first aspect of the present invention, both bracket components are joined permanently with the set inclination angle by welding, gluing or bonding both bracket components together.

The invention further provides according to a second aspect a method for manufacturing a multi-use windshield bracket of a vehicle comprising the features of claim 6.

In a possible embodiment of the method according to the second aspect of the present invention, both bracket components are joined permanently together after having set the inclination angle by welding, gluing or bonding both bracket components together.

In a further possible embodiment of the method according to the second aspect of the present invention, the inserted rectified stand comprises a height defining a desired set inclination angle and is selected from a group of available rectified stands corresponding to windshields of different types used in the same or different carlines.

The invention further provides a vehicle comprising a driver assistance system with electronic sensor devices mounted to a windshield of said vehicle by a multi-use bracket having the features of claim 9.

The invention provides according to a third aspect of the present invention a vehicle comprising a driver assistance system with electronic sensor devices mounted to a windshield of said vehicle by a multi-use bracket, wherein the adjustable multi-use windshield bracket comprises
a first bracket component connected to a second bracket component by a snap-in rotational coupling allowing a relative rotation between both bracket components around a rotation axis to set an inclination angle fixed by joining both bracket components with the set inclination angle.

In a possible embodiment of the vehicle according to the third aspect of the present invention, the multi-use bracket comprises a set inclination angle corresponding to the inclination angle of the windshield of said vehicle.

In the following, possible embodiments of the different aspects of the present invention are described with reference to the enclosed figures in more detail.
- Figure 1: shows a perspective view on an exemplary embodiment of a fixed bracket component used in an adjustable multi-use windshield bracket according to the first aspect of the present invention;
- Figure 2: shows a perspective view on a mobile bracket component as used in an adjustable multi-use windshield bracket according to the first aspect of the present invention;
- Figure 3: shows an exemplary snap-in rotational coupling at the fixed bracket component;
- Figure 4: shows a snap-in rotational coupling at the mobile bracket component;
- Figure 5: shows a diagram for illustrating the dimensions of the snap-in rotational coupling at the fixed bracket component as illustrated in Figure 3;
- Figure 6: shows a diagram for illustrating the dimensions of the snap-in rotational coupling at the mobile side bracket component as illustrated in Figure 4;
- Figure 7: shows a perspective view of the fixed and mobile bracket components before assembly by means of the snap-in rotational coupling;
- Figure 8: shows a diagram for illustrating an assembly process of a snap-in rotational coupling as used in an adjustable multi-use windshield bracket according to the first aspect of the present invention;
- Figure 9: shows a diagram for illustrating the assembled snap-in rotational coupling of Figure 8;
- Figure 10: shows a perspective view of the preassembled fixed and mobile bracket components as used in an adjustable multi-use windshield bracket according to the first aspect of the present invention;
- Figure 11: illustrates the setting of an inclination angle between the fixed and mobile bracket components of an adjustable multi-use windshield bracket according to the first aspect of the present invention;
- Figure 12: shows a top view on a fixed and mobile bracket component assembled together by a snap-in rotational coupling;
- Figure 13: shows a flow chart illustrating a possible exemplary embodiment of a method for manufacturing a multi-use windshield bracket of a vehicle according to the second aspect of the present invention.

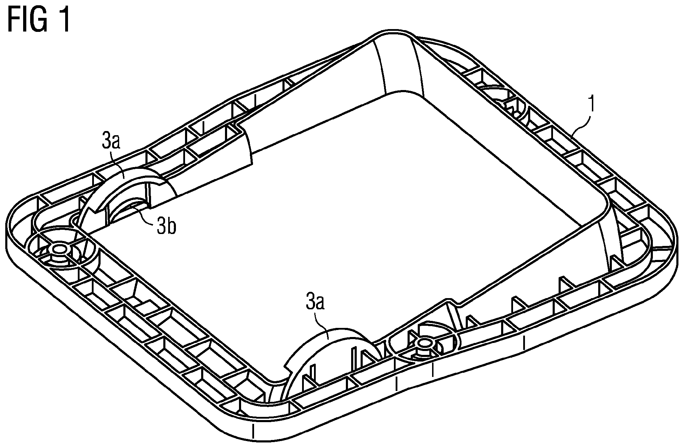

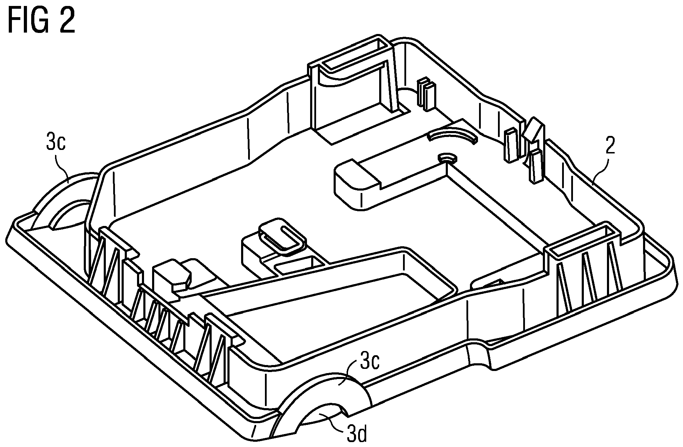

The adjustable multi-use windshield bracket for mounting electronic and/or mechanical components onto a windshield of a vehicle according to the first aspect of the present invention consists of two bracket components 1, 2 as illustrated in Figures 1, 2. Figure 1 shows an exemplary embodiment of a fixed bracket component 1 which can be connected to a second mobile bracket component 2 as illustrated in Figure 2. The adjustable multi-use windshield bracket comprises the first bracket component 1 connected to the second bracket component 2 by a snap-in rotational coupling 3 allowing a relative rotation between both bracket components 1, 2 around a rotation axis to set an inclination angle fixed by joining both bracket components 1, 2 with the set inclination angle. Accordingly, with the adjustable multi-use windshield bracket according to the present invention, the two bracket components 1, 2 are connected to each other and then the angle is set. The connection between the two bracket components 1, 2 is achieved by means of a snap-in rotational coupling 3 allowing a relative rotation between both bracket components 1, 2 around a rotation axis to set an inclination angle.

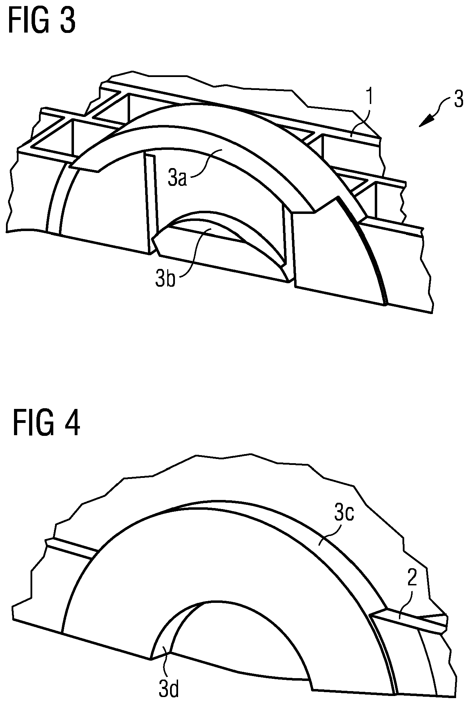

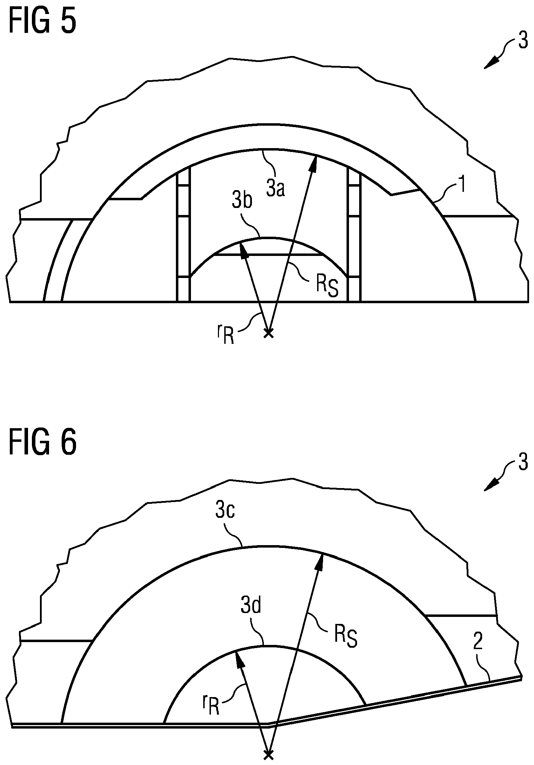

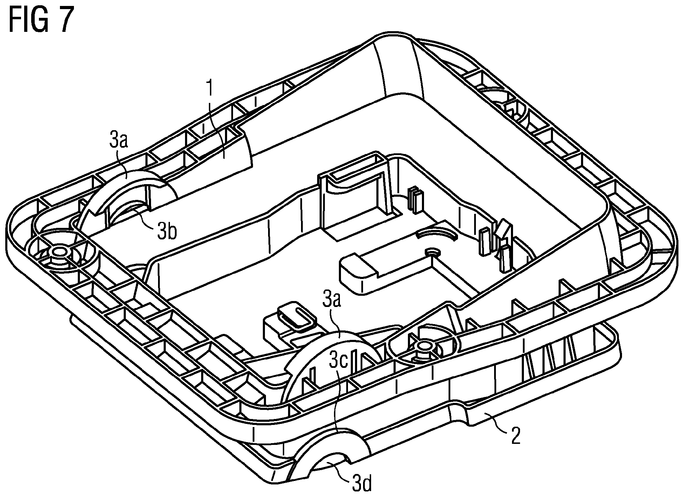

Figures 3, 4, 5, 6 illustrate a possible exemplary embodiment of a snap-in rotational coupling 3 used for connecting the fixed and mobile bracket components 1, 2 of the adjustable multi-use windshield bracket. Figure 3 shows the snap-in rotational coupling 3 provided at the fixed bracket component 1 illustrated in Figure 1. Figure 4 shows the snap-in rotational coupling 3 at the mobile bracket component 2 illustrated in Figure 2. The snap-in rotational coupling 3 between the first fixed bracket component 1 and the second mobile bracket component 2 comprises at the fixed bracket component 1 a half cylindrical support surface 3a with a predetermined radius Rₛ and a snapper 3b having a half cylindrical retaining surface with a radius r_{R} as also illustrated in the diagram of Figure 5. Further, the snap-in rotational coupling 3 comprises at the mobile bracket component 2 as illustrated in Figure 2 a complementary half cylindrical support surface 3c with the same predetermined radius Rₛ as the half cylindrical support surface 3a and a half cylindrical pocket 3d adapted to receive the snapper 3b at the fixed bracket component 1. The snapper 3b of the fixed bracket component 1 has a half cylindrical retaining surface which is marginally smaller than the radius of the half cylindrical pocket 3d of the second mobile bracket component 2 to allow a preassembly of both bracket components 1, 2. As illustrated in Figure 7, the mobile bracket component 2 shown in Figure 2 can be inserted into the fixed bracket component 1 illustrated in Figure 1 from below.

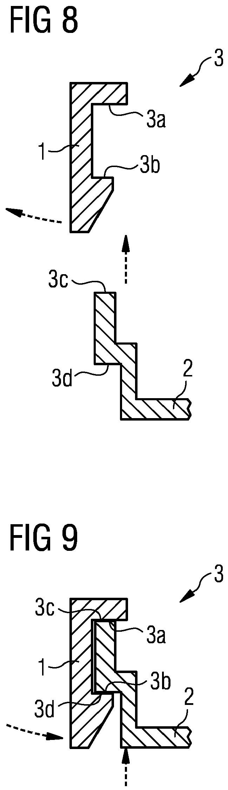

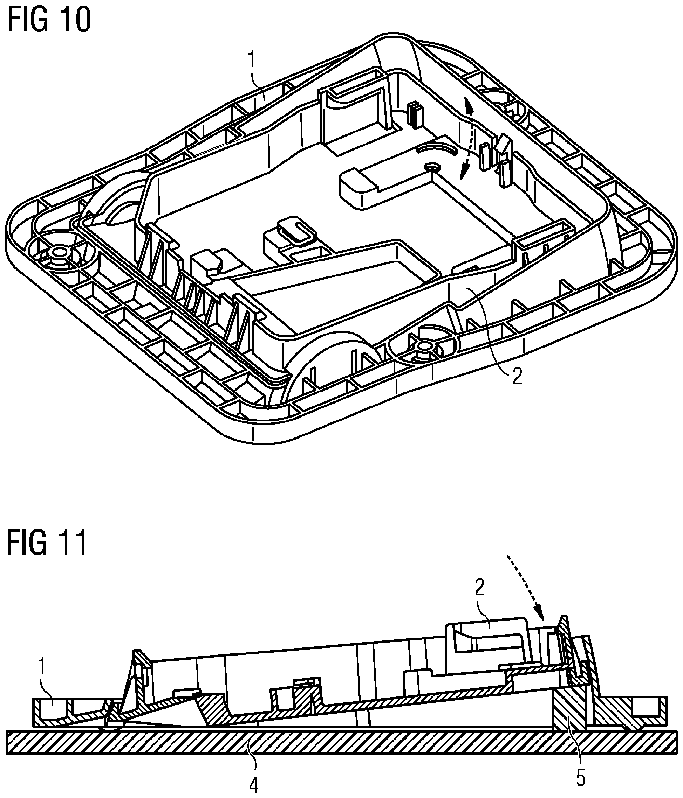

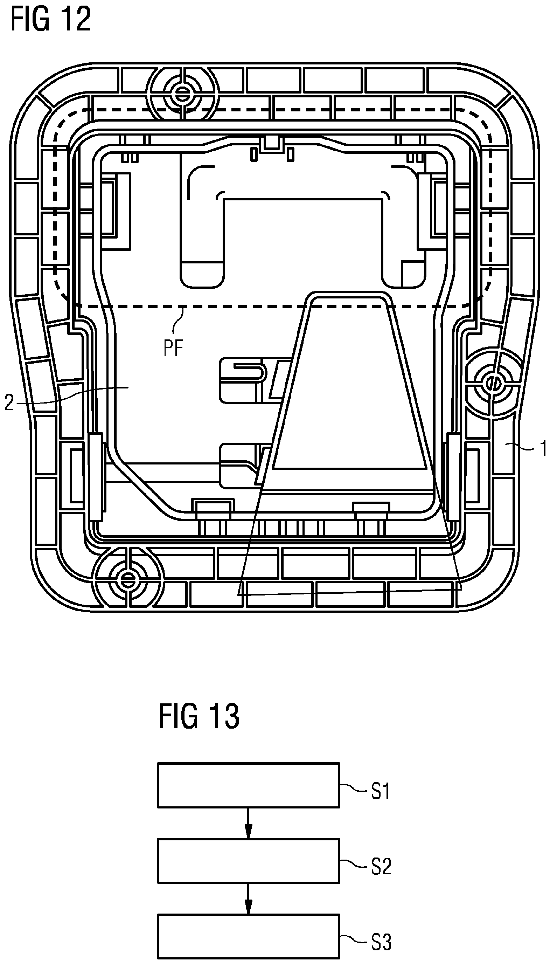

The diagrams of Figures 8, 9 illustrate connecting the rotational coupling between the two bracket components 1, 2 for preassembling the multi-use windshield bracket. It can be seen in Figure 8 that the inside support surface 3a of the fixed bracket component 1 with the outside support surface 3c of the mobile bracket component 2 are complementary constituting a sliding contact surface between the two bracket components 1, 2. The retaining surface of the snapper 3b of the fixed bracket component 1 with the surface 3d of the pocket of the mobile bracket component 2 are also complementary holding both bracket components 1, 2 in place. As the mobile bracket component 2 is pushed against the fixed bracket component 1 from the bottom side, the snapper 3b from the fixed bracket component 1 bends and allows the mobile bracket component 2 to snap into the final position as shown in Figure 9. At this stage, the two bracket components are preassembled, i.e. the bracket components 1, 2 are held together, but there is still a rotation around a rotation axis possible. In other words, the snap-in rotational coupling 3 takes away five degrees of freedom from the assembly leaving one degree of motion freedom, i.e. rotation around the rotation axis of the snap-in rotational coupling 3. After having performed the preassembling of the multi-use windshield bracket by snapping the first bracket component 1 into the second bracket component 2 by means of the mechanical snap-in rotational coupling 3, the inclination angle can be set between the two bracket components 1, 2 eliminating the last degree of motion freedom. In a possible embodiment, this is done by placing the preassembled multi-use windshield bracket as illustrated in Figure 10 on a rectified plate 4, having a flat surface. As illustrated in Figure 11, the fixed bracket component 1 is in contact with the flat surface. The mobile bracket component 2 is still able to rotate freely around the rotation axis of the snap-in rotational coupling 3. At this stage, a rectified stand 5 of a predetermined height is inserted to define a desired set inclination angle. The mobile second bracket component 2 is rotated around the rotation axis of the snap-in rotational coupling 3 until it abuts on the inserted rectified stand 5 to define the desired set inclination angle. The rectified stand 5 limits the rotation in the downward direction as illustrated in Figure 11. The rectified stand 5 has the precise height that limits the rotation of the mobile bracket component 2 so that in the contact position between this rectified stand 5 and the mobile bracket component 2 the angle between the two bracket component halves is at precisely the desired angle value. The next step of the assembly process is fixing the set angle. This is illustrated in Figure 12. In this step, both bracket components 1, 2 can be joined together with the set inclination angle. In a possible embodiment, both bracket components 1, 2 are joined permanently together after having set the inclination angle by welding, gluing or bonding both bracket components 1, 2 together. A permanent fixing PF is illustrated in Figure 12 as a dashed line. With the preassembled complete bracket on the jig that is used to set the angle, the permanent fixing PF is performed between the fixed and mobile bracket components in the back side area of the bracket for a better stability and resistance. The options include but are not limited to laser welding, ultrasonic welding, gluing or electromagnetic resin bonding. The adjustable multi-use windshield brackets can then be fixed or attached to the windshield of the vehicle. In a further possible embodiment, the adjustable multi-use windshield bracket with the set inclination angle is connected to a flexible supporting bracket of a modular bracket assembly before being attached to the curved windshield of the vehicle. In a possible embodiment, the inserted rectified stand 5 as illustrated in Figure 11 is selected from a group of available rectified stands corresponding to windshields of different types used in the same or different carlines.

Figure 13 shows a flow chart for illustrating an exemplary embodiment of a method for manufacturing a multi-use windshield bracket of a vehicle according to the second aspect of the present invention.

In a first step S1, the multi-use windshield bracket is preassembled by snapping a first bracket component 1 into a second bracket component 2 by means of a mechanical snap-in rotational coupling 3.

In a second step S2, the first bracket component 1 of the preassembled multi-use windshield bracket is placed on a flat surface and the mobile second bracket component 2 is rotated around a rotational axis of the snap-in rotating coupling 3 until it abuts on an inserted rectified stand 5 of a predetermined height defining a desired set inclination angle.

In a further step S3 of the manufacturing method, both bracket components 1, 2 are joined together with the set inclination angle.

After having manufactured the multi-use windshield bracket of the vehicle as illustrated in Figure 13, the multi-use windshield bracket can be connected by a connecting plate of a multi-bracket assembly with other brackets. The connecting plate of this multi-bracket assembly can be made of a flexible material to allow mounting of the different brackets including the adjustable multi-use windshield bracket according to the present invention to a curved surface, in particular to a curved windshield. After having connected the manufactured multi-use windshield brackets according to the present invention with other windshield brackets, the complete assembly can be fixed or attached to the windshield or another curved surface of the vehicle, for instance by gluing.

The manufactured multi-use windshield bracket according to the present invention as illustrated in Figure 12 can be used to receive mechanical, electronic or electromechanical components, in particular sensor devices of a driver assistance system of a vehicle. The adjustable multi-use windshield bracket can be used to receive an optical sensor device mounted on a windshield of the vehicle. An advantage of the adjustable multi-use windshield bracket according to the present invention is that it does not require additional mechanical components like nuts and bolts. The snap-in rotational coupling 3 is used both to provide the relative rotation support and to fix the relative position of the two bracket halves. The final step of fixing the angle is comparatively fast and simple, unlike using nuts and bolts or screws, as no extra components are required and one does not need a precise control of the torque of the nut, bolt or screw to prevent part damaging or having insufficient mechanical force available.

Another advantage of the adjustable multi-use windshield bracket is that the angle setting can be performed very precisely. The height of the rectified stand 5 is very easy to control and because of the relatively large distance between the rectified stand 5 to the rotation axis of the snap-in rotational coupling 3 a very fine angle adjustment is possible, because a relatively large change in the height of the rectified stand 5 results in a small change in the set angle. Moreover, the height of the rectified stand 5 can be changed at any time to adapt to external factors that can influence the functionality of the sensor devices like a deviation of the windshield that changes the pitch angle in the area where the bracket is mounted. Finally, the adjustable multi-use windshield bracket according to the present invention can be used for any sensor devices and sensor angle requirements on all carlines. With the method according to the present invention, only one assembly jig including the rectified surface and the rectified stand 5 is needed per carline, and all brackets can be made and assembled very fast with minimal risks.

## Claims

1. An adjustable multi-use windshield bracket for mounting electronic and/or mechanical components onto a windshield of a vehicle,
said adjustable multi-use windshield bracket comprising:
a first bracket component (1) connected to a second bracket component (2) by a snap-in rotational coupling (3) allowing a relative rotation between both bracket components (1, 2) around a rotation axis to set an inclination angle fixed by joining both bracket components (1, 2) with the set inclination angle,
wherein the first bracket component (1) is a fixed bracket component placed on a flat surface for adjusting the inclination angle between the fixed bracket component (1) and the rotating mobile second bracket component (2) to a predetermined set inclination angle corresponding to the inclination angle of the windshield, **characterized in that** the snap-in rotational coupling (3) between the first fixed bracket component (1) and the second mobile bracket component (2) comprises at the fixed bracket component (1) a half cylindrical support surface (3a) with a predetermined radius (Rₛ) and a snapper (3b) having a half cylindrical retaining surface and comprises at the mobile bracket component (2) a complementary half cylindrical support surface (3c) with the same predetermined radius and a half cylindrical pocket (3d) adapted to receive the snapper (3b) of the fixed bracket component (1).

2. The adjustable multi-use windshield bracket according to claim 1, wherein the inclination angle between the fixed bracket component (1) and the rotating mobile second bracket component (2) is adjustable by means of an inserted rectified stand (5) limiting the rotation of the mobile second bracket component (2) towards the flat surface.

3. The adjustable multi-use windshield bracket according to claim 2, wherein the rectified stand (5) is inserted between the mobile second bracket component (2) and the flat surface and comprises a height defining the desired set inclination angle.

4. The adjustable multi-use windshield bracket according to claim 1, wherein the snapper (3b) of the fixed bracket component (1) has a half cylindrical retaining surface which is marginally smaller than the radius of the half cylindrical pocket (3d) of the second mobile bracket component (2) to allow a preassembly of both bracket components (1, 2).

5. The adjustable multi-use windshield bracket according to one of the preceding claims 1 - 4, wherein both bracket components (1, 2) are joined permanently together with the set inclination angle by welding, gluing or bonding both bracket components together.

6. A method for manufacturing a multi-use windshield bracket of a vehicle comprising the steps of:
(a) preassembling (S1) the multi-use windshield bracket by snapping a first bracket component (1), which is a fixed bracket component, into a second bracket component (2) by means of a mechanical snap-in rotational coupling (3) the snap-in rotational coupling (3) between the first fixed bracket component (1) and the second mobile bracket component (2), the snap-in rotational coupling (3) comprising at the fixed bracket component (1) a half cylindrical support surface (3a) with a predetermined radius (Rₛ) and a snapper (3b) having a half cylindrical retaining surface and comprising at the mobile bracket component (2) a complementary half cylindrical support surface (3c) with the same predetermined radius and a half cylindrical pocket (3d) adapted to receive the snapper (3b) of the fixed bracket component (1);
(b) placing (S2) the first bracket component (1) of the preassembled multi-use windshield bracket on a flat surface and rotating the mobile second bracket component (2) around a rotational axis of said snap-in rotating coupling (3) until it abuts on an inserted rectified stand (5) of predetermined height defining a desired set inclination angle; and
(c) joining (S3) both bracket components (1, 2) together with the set inclination angle.

7. The method according to claim 6, wherein both bracket components (1, 2) are joined permanently together after having set the inclination angle by welding, gluing or bonding both bracket components together.

8. The method according to claim 6 or 7, wherein the inserted rectified stand (5) comprises a height defining a desired set inclination angle and is selected from a group of available rectified stands corresponding to windshields of different types used in the same or different carlines.

9. A vehicle comprising a driver assistance system with electronic sensor devices mounted to a windshield of said vehicle by a multi-use bracket according to one of the preceding claims 1 to 5.

10. The vehicle according to claim 9, wherein the multi-use bracket comprises a set inclination angle corresponding to the inclination angle of the windshield of said vehicle.

## Patentansprüche

1. Verstellbare Mehrzweckhalterung zur Montage elektronischer und/oder mechanischer Komponenten an einer Windschutzscheibe eines Fahrzeugs,
wobei die verstellbare Mehrzweckhalterung für eine Windschutzscheibe umfasst: eine erste Halterungskomponente (1), die mit einer zweiten Halterungskomponente (2) durch eine drehbare Schnappkupplung (3) verbunden ist, was eine relative Drehung zwischen beiden Halterungskomponenten (1, 2) um eine Drehachse ermöglicht, um einen Neigungswinkel einzustellen, der durch Zusammenfügen beider Halterungskomponenten (1, 2) mit dem eingestellten Neigungswinkel festgestellt wird,
wobei die erste Halterungskomponente (1) eine ortsfeste Halterungskomponente ist, die auf einer ebenen Oberfläche platziert wird, um den Neigungswinkel zwischen der ortsfesten Halterungskomponente (1) und der drehbaren ortsveränderlichen zweiten Halterungskomponente (2) auf einen vorbestimmten eingestellten Neigungswinkel zu verstellen, der dem Neigungswinkel der Windschutzscheibe entspricht,
**dadurch gekennzeichnet, dass**
die drehbare Schnappkupplung (3) zwischen der ersten ortsfesten Halterungskomponente (1) und der zweiten ortsveränderlichen Halterungskomponente (2) an der ortsfesten Halterungskomponente (1) eine halbzylindrische Auflagefläche (3a) mit einem vorbestimmten Radius (Rₛ) und einen Schnapper (3b) mit einer halbzylindrischen Haltefläche umfasst und an der ortsveränderlichen Halterungskomponente (2) eine komplementäre halbzylindrische Auflagefläche (3c) mit dem gleichen vorbestimmten Radius und einer halbzylindrischen Aussparung (3d) umfasst, die dazu geeignet ist, den Schnapper (3b) der ortsfesten Halterungskomponente (1) aufzunehmen.

2. Verstellbare Mehrzweckhalterung für eine Windschutzscheibe nach Anspruch 1, wobei der Neigungswinkel zwischen der ortsfesten Halterungskomponente (1) und der drehbaren ortsveränderlichen zweiten Halterungskomponente (2) mittels eines eingesetzten geraden Untersatzes (5) verstellbar ist, der die Drehung der ortsveränderlichen zweiten Halterungskomponente (2) zu der ebenen Oberfläche hin begrenzt.

3. Verstellbare Mehrzweckhalterung für eine Windschutzscheibe nach Anspruch 2, wobei der gerade Untersatz (5) zwischen der ortsveränderlichen zweiten Halterungskomponente (2) und der ebenen Oberfläche eingesetzt ist und eine Höhe umfasst, die den gewünschten eingestellten Neigungswinkel definiert.

4. Verstellbare Mehrzweckhalterung für eine Windschutzscheibe nach Anspruch 1, wobei der Schnapper (3b) der ortsfesten Halterungskomponente (1) eine halbzylindrische Haltefläche aufweist, die geringfügig kleiner ist als der Radius der halbzylindrischen Aussparung (3d) der zweiten ortsveränderlichen Halterungskomponente (2), um eine Vormontage beider Halterungskomponenten (1, 2) zu erlauben.

5. Verstellbare Mehrzweckhalterung für eine Windschutzscheibe nach einem der vorangehenden Ansprüche 1 bis 4, wobei beide Halterungskomponenten (1, 2) durch Verschweißen, Verkleben oder Binden beider Halterungskomponenten mit dem eingestellten Neigungswinkel dauerhaft zusammengefügt sind.

6. Verfahren zur Herstellung einer Mehrzweckhalterung für eine Windschutzscheibe eines Fahrzeugs, umfassend die Schritte:
(a) Vormontieren (S1) der Mehrzweckhalterung für eine Windschutzscheibe durch Einschnappenlassen einer ersten Halterungskomponente (1), die eine ortsfeste Halterungskomponente ist, in eine zweite Halterungskomponente (2) mittels einer mechanischen drehbaren Schnappkupplung (3), der drehbaren Schnappkupplung (3) zwischen der ersten ortsfesten Halterungskomponente (1) und der zweiten ortsveränderlichen Halterungskomponente (2), wobei die drehbare Schnappkupplung (3) an der ortsfesten Halterungskomponente (1) eine halbzylindrische Auflagefläche (3a) mit einem vorbestimmten Radius (Rₛ) und einen Schnapper (3b) mit einer halbzylindrischen Haltefläche umfasst und an der ortsveränderlichen Halterungskomponente (2) eine komplementäre halbzylindrische Auflagefläche (3c) mit dem gleichen vorbestimmten Radius und einer halbzylindrischen Aussparung (3d) umfasst, die dazu geeignet ist, den Schnapper (3b) der ortsfesten Halterungskomponente (1) aufzunehmen;
(b) Platzieren (S2) der ersten Halterungskomponente (1) der vormontierten Mehrzweckhalterung für eine Windschutzscheibe auf einer ebenen Oberfläche und Drehen der ortsveränderlichen zweiten Halterungskomponente (2) um eine Drehachse der drehbaren Schnappkupplung (3), bis sie an einen eingesetzten geraden Untersatz (5) einer vorbestimmten Höhe, der einen gewünschten eingestellten Neigungswinkel definiert, anstößt; und
(c) Zusammenfügen (S3) beider Halterungskomponenten (1, 2) mit dem eingestellten Neigungswinkel.

7. Verfahren nach Anspruch 6, wobei beide Halterungskomponenten (1, 2) nach Einstellung des Neigungswinkels durch Verschweißen, Verkleben oder Binden beider Halterungskomponenten dauerhaft zusammengefügt werden.

8. Verfahren nach Anspruch 6 oder 7, wobei der eingesetzte gerade Untersatz (5) eine Höhe umfasst, die einen gewünschten eingestellten Neigungswinkel definiert und ausgewählt ist aus einer Gruppe verfügbarer gerader Untersätze, die Windschutzscheiben unterschiedlicher Arten, die in der gleichen oder in unterschiedlichen Fahrzeugbaureihen verwendet werden, entsprechen.

9. Fahrzeug, umfassend ein Fahrerassistenzsystem mit Vorrichtungen mit elektronischen Sensoren, die durch eine Mehrzweckhalterung nach einem der vorangehenden Ansprüche 1 bis 5 an einer Windschutzscheibe des Fahrzeugs montiert sind.

10. Fahrzeug nach Anspruch 9, wobei die Mehrzweckhalterung einen eingestellten Neigungswinkel umfasst, der dem Neigungswinkel der Windschutzscheibe des Fahrzeugs entspricht.

## Revendications

1. Support de pare-brise multi-usage réglable pour monter des composants électroniques et/ou mécaniques sur un pare-brise d'un véhicule,
ledit support de pare-brise multi-usage réglable comprenant : un premier composant de support (1) connecté à un deuxième composant de support (2) par un accouplement en rotation par encliquetage (3) permettant une rotation relative entre les deux composants de support (1, 2) sur un axe de rotation pour former un angle d'inclinaison fixé en reliant les deux composants de support (1, 2) avec l'angle d'inclinaison de calage,
le premier composant de support (1) étant un composant de support fixe placé sur une surface plate pour ajuster l'angle d'inclinaison entre le composant de support fixe (1) et le deuxième composant de support mobile pivotant (2) à un angle d'inclinaison de calage prédéterminé correspondant à l'angle d'inclinaison du pare-brise,
**caractérisé en ce que**
le couplage rotatif à encliquetage (3) entre le premier composant de support fixe (1) et le deuxième composant de support mobile (2) comprend, sur le composant de support fixe (1), une surface de support demi-cylindrique (3a) avec un rayon prédéterminé (Rₛ) et un arrêtoir (3b) ayant une surface de retenue denmi-cylindrique et comprenant, sur le composant de support mobile (2), une surface de support demi-cylindrique complémentaire (3c) avec le même rayon prédéterminé et un logement demi-cylindrique (3d) adapté pour accueillir l'arrêtoir (3b) du composant de support fixe (1).

2. Support de pare-brise multi-usage réglable selon la revendication 1, l'angle d'inclinaison entre le composant de support fixe (1) et le deuxième composant de support mobile pivotant (2) étant réglable au moyen d'un socle droit inséré (5) limitant la rotation du deuxième composant de support mobile (2) vers la surface plate.

3. Support de pare-brise multi-usage réglable selon la revendication 2, le socle droit (5) étant inséré entre le deuxième composant de support mobile (2) et la surface plate, et comprenant une hauteur définissant l'angle d'inclinaison de calage désiré.

4. Support de pare-brise multi-usage réglable selon la revendication 1, l'arrêtoir (3b) du composant de support fixe (1) ayant une surface de retenue demi-cylindrique, laquelle est légèrement plus petite que le rayon du logement demi-cylindrique (3d) du deuxième composant de support mobile (2) pour permettre un prémontage des deux composants de support (1, 2).

5. Support de pare-brise multi-usage réglable selon l'une quelconque des revendications précédentes 1 à 4, les deux composants de support (1, 2) étant reliés ensemble de façon permanente avec l'angle d'inclinaison de calage par soudage, collage ou liaison des deux composants de support l'un à l'autre.

6. Procédé pour la fabrication d'un support de pare-brise multi-usage d'un véhicule comprenant les étapes de :
(a) prémonter (S1) le support de pare-brise multi-usage par encliquetage d'un premier composant de support (1), lequel est un composant de support fixe, dans un deuxième composant de support (2) au moyen d'un couplage pivotant à encliquetage mécanique (3), le couplage pivotant à encliquetage (3) entre le premier composant de support fixe (1) et le deuxième composant de support mobile (2), le couplage pivotant à encliquetage (3) comprenant, sur le composant de support fixe (1), une surface de support demi-cylindrique (3a) avec un rayon prédéterminé (Rₛ) et un arrêtoir (3b) ayant une surface de retenue demi-cylindrique et comprenant, sur le composant de support mobile (2), une surface de support demi-cylindrique complémentaire (3c) avec le même rayon prédéterminé et un logement demi-cylindrique (3d) adapté pour accueillir l'arrêtoir (3b) du composant de support fixe ;
(b) placer (S2) le premier composant de support (1) du support de pare-brise multi-usage prémonté sur la surface plate et faire pivoter le deuxième composant de support mobile (2) sur un axe de rotation du couplage pivotant à encliquetage (3) jusqu'à ce qu'il bute sur un socle droit inséré (5) de hauteur prédéterminée définissant un angle d'inclinaison de calage désiré ; et
(c) relier (S3) ensemble les deux composants de support (1, 2) avec l'angle d'inclinaison de calage.

7. Procédé selon la revendication 6, les deux composants de support (1, 2) étant reliés ensemble de façon permanente après avoir formé l'angle d'inclinaison par soudage, collage ou liaison des deux composants de support l'un à l'autre.

8. Procédé selon la revendication 6 ou 7, le socle droit inséré (5) comprenant une hauteur définissant un angle d'inclinaison de calage désiré et étant sélectionné parmi un groupe de socles droit disponibles correspondant aux pare-brise de différents types utilisés sur la même gamme de voitures ou sur des gammes de voitures différentes.

9. Véhicule comprenant un système d'aide à la conduite avec capteurs électroniques montés sur un pare-brise dudit véhicule par un support multi-usage selon l'une des revendications précédentes 1 à 5.

10. Véhicule selon la revendication 9, le support multi-usage comprenant un angle d'inclinaison de calage correspondant à l'angle d'inclinaison du pare-brise dudit véhicule.
